(19) Europäisches Patentamt
European Patent Office
Office européen des brevets

(11) **EP 4 497 949 A1**

(12) **EUROPEAN PATENT APPLICATION**

(43) Date of publication:
**29.01.2025 Bulletin 2025/05**

(21) Application number: **23306305.6**

(22) Date of filing: **27.07.2023**

(51) International Patent Classification (IPC):
**F04D 15/00** (2006.01)　　　**G01F 1/34** (2006.01)

(52) Cooperative Patent Classification (CPC):
**F04D 15/0088; G01F 1/34;** F05D 2260/821;
F05D 2270/3013; F05D 2270/71

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Schneider Toshiba Inverter Europe
SAS
27120 Pacy-sur-Eure (FR)**

(72) Inventors:
• EJJABRAOUI, Kamal
　**27930 GRAVIGNY (FR)**
• INEZA, Albin
　**78440 GARGENVILLE (FR)**

(74) Representative: **Plasseraud IP
104 Rue de Richelieu
CS92104
75080 Paris Cedex 02 (FR)**

(54) **METHOD FOR ESTIMATING THE FLOW RATE OF A PUMP BASED ON TWO PRESSURE SENSORS INSTALLED DOWNSTREAM OF THE PUMP**

(57)　Method for estimating the output flow rate provided by a pump (1) in a system comprising said pump, an upstream pipe (2) and a downstream pipe (3), by using pressure information coming from a first downstream pressure sensor (12) placed on the downstream pipe (3) at a first distance (d1) from the pump (1) and a second downstream pressure sensor (14) placed on the downstream pipe (3) at a second distance (d1+L) from the pump (1) for calculating said output flow rate.

FIG. 4

**Description**

**Technical Field**

This disclosure pertains to the field of pump systems where a pump, in particular a centrifugal pump, pumps a fluid from an upstream pipe to a downstream pipe.

**Background Art**

Pump systems are used in various hydraulic applications. Such systems transport different kinds of fluid with different properties and densities e.g., from clean water to wastewater applications. During their operation, the different mechanical parts such as impeller, blades, wear-ring, diffuser, that compose the pump are subject to wear, and they can wear differently depending on the wear causes, e.g., cavitation, corrosion, abrasion, abnormal usage...; The degradation of those parts generates internal losses and decreases the performance of the centrifugal pump. The losses can be quantified in terms of loss of flow rate and loss of total dynamic head capacity of the pump.

In certain cases, one pressure sensor located at the output of the pump is present and no flow meters are used since a flow meter is much more expensive than a pressure sensor. Without a flow rate sensor, it is difficult to monitor the system operation and drift in pump characteristics without having the flow rate information.

The estimation of the flow rate downwards from the pump may however be done by using pump curves provided by the pump manufacturer, i.e., power vs. flow rate and a measured or estimated power which allows to deduce the flow rate by extrapolating from the configured pump curve at the corresponding pump speed. This method is however not very accurate.

**Summary**

The present disclosure improves the situation in proposing a new method to obtain a measurement of the flow rate of a pump.

More precisely, the present disclosure proposes a method for estimating the output flow rate provided by a pump, in a system comprising said pump, an upstream pipe and a downstream pipe, by using pressure information coming from a first downstream pressure sensor placed on the downstream pipe at a first distance from the pump and a second downstream pressure sensor placed on the downstream pipe at a second distance from the pump such that a known distance separates said first and second pressure sensors for calculating said output flow rate using the downstream pipe characteristics, the distance between the first and the second sensors and an output flow rate estimator model of the flow rate in the downstream pipe.

In the present disclosure, thanks to the additional downstream pressure sensor at a defined distance from the first downstream pressure sensor which itself is located remote from the pump, the flow in the system may be estimated with an estimator model, or observatory, by knowing two downstream pressure information and the pipe characteristics for identification of the flow rate in a defined pipe section.

The following features, can be optionally implemented, separately or in combination one with the others:

The output flow rate estimator model E1 may be defined by the equations:

$$\begin{cases} \hat{Q} = K_p \cdot \left( \Delta P_{measured} - \widehat{\Delta P} \right) + \dfrac{d\hat{Q}}{dt} \\ \dfrac{d\hat{Q}}{dt} = K_i \cdot \left( \Delta P_{measured} - \widehat{\Delta P} \right) \\ \widehat{\Delta P} = \dfrac{\left( \hat{F} \cdot L \cdot v^2 \cdot \rho \right)}{2 \cdot D} \end{cases}$$

Where $\hat{Q}$ is the Estimated flow rate (m3/h), $\widehat{\Delta P}$ is the Estimated differential pressure (bar), $\Delta P_{measured}$ is the Measured differential pressure (bar), $\hat{F}$ is the Estimated friction losses coefficient, $L$ is the Pipe length (m) between said first and second pressure sensors (12, 14), D is the Pipe diameter (m), $v$ is the Fluid flow velocity (m/s), $\rho$ is the Fluid density (kg/m3), $K_p$ is the Proportional gain of the flow estimator, $K_i = \dfrac{K_p}{T_{iq}}$ in which $T_{iq}$ is the Integrator time constant (s) in the flow estimator.

The friction loss coefficient $\hat{F}$ may be a fixed constant.

Preferably, the friction loss coefficient $\hat{F}$ may be calculated based on a friction loss coefficient estimator model E2 defined by the equations:

$$\begin{cases} \hat{F} = K_1 \cdot \left(1 - \hat{X}\right) + \frac{\widehat{dF}}{dt} \\ \frac{d\hat{F}}{dt} = K_2 \cdot \left(1 - \hat{X}\right) \\ \hat{X} = -2 \times \sqrt{\hat{F}} \times \log\left(\frac{2.51}{R_e \times \sqrt{F}} + \frac{nu}{3.71 \times D}\right) \end{cases}$$

when the Reynolds coefficient $R_e$ of the flow in the downstream pipe is greater or equal than 2300. or comprising a friction loss coefficient $\hat{F}$ calculation where $\hat{F} = \frac{64}{R_e}$ when the Reynolds coefficient $R_e$ of the flow in the downstream pipe is smaller than 2300.

The method may comprise measuring a pump speed and power information coming from a command unit of said pump to compare the estimated output flow rate and the flow rate calculated with the pump curves of the pump to detect wear of the pump.

The method is particularly adapted for a centrifugal pump.

In another aspect, it is proposed a software comprising instructions to implement at least a part of a method as defined hereabove when the software is executed by a processor.

In another aspect, it is proposed a computer-readable non-transient recording medium on which a software is registered to implement the method as defined here when the software is executed by a processor.

**Brief Description of Drawings**

Other features, details and advantages will be shown in the following detailed description and on the figures, on which:

Figure 1 is a schematic drawing of a pump and piping with pressure sensors and flow meter;
Figures 2A and 2B are respectively a Head versus flow rate curve and a Power versus flow rate curve of pump datasheets;
Figure 3 is a schematic view of a pump and piping with additional downstream pressure sensor;
Figure 4 is a schematic view of a flow rate estimation process;
Figure 5 is a schematic view of a friction loss estimation process.

**Description of Embodiments**

In the present disclosure the following notations are used in the equations hereunder:

| | |
|---|---|
| $H_{pump}$ | Pump Total dynamic head (m) |
| $Q_{pump}$ | Pump flow rate (m3/h) |
| PWpump | Pump mechanical power (kW) |
| $\omega$ | Pump mechanical speed (rpm) |
| $\omega_n$ | Pump nominal mechanical speed (rpm) |
| $Q_{system}$ | System flow rate (m3/h) |
| $Q$ | Flow rate (m3/h) |
| $Q$ | Estimated flow rate (m3/h) |
| $\widehat{\Delta P}$ | Estimated differential pressure (bar) |
| $\Delta P_{measured}$ | Measured differential pressure (bar) |
| $\hat{F}$ | Estimated friction losses coefficient |

(continued)

| | |
|---|---|
| $L$ | Pipe length (m) |
| D | Pipe diameter (m) |
| $\upsilon$ | Fluid flow velocity (m/s) |
| $\rho$ | Fluid density (kg/m3) |
| $R_e$ | Reynolds coefficient |
| $\mu$ | Dynamic viscosity kg/(m.s) |
| $nu$ | Pipe rugosity (m) |
| $T_{iq}$ | Integrator time constant (s) of flow estimator |
| $T_i$ | Integrator time constant (s) of friction loss estimator |
| $K_p$ | Proportional gain of flow estimator |

Pumping stations usually do not have flow meters to give the information of the flow rate outcoming from the pumps of such pumping stations because globally flow meters are complex to install depending on the pumping station and are more expensive than pressure sensors which are less complex to install on the pipes of such stations. Except the use of the power and manufacturer datasheet, there is no known method in the literature that allow to provide an accurate value of the flow rate outside the pump without using an external flow rate sensor. In addition, the use of the power and manufacturer datasheet gives only the flow rate inside the pump which is generally higher due to internal recirculation in the pump.

Traditionally, when using an upstream pressure sensor, a downstream pressure sensor to calculate the pump head, the pump Head vs. flow rate characteristic of the pump datasheet and the measured inlet and outlet pressure, the flow rate may be deduced from the pump curves provided by the manufacturer at the corresponding pump speed. This is translated with mathematical equations as follows:

The pump characteristics are identified by the following equations:

$$H_{pump} = x^2 \cdot F(Q_{pump}, x)$$

$$Pw_{pump} = x^3 \cdot G(Q_{pump}, x)$$

$$x = \frac{\omega}{\omega_n}$$

Where: $H_{pump}$ is the head of the pump, $Q_{pump}$ is the pump flow rate, where $\omega$ is the pump mechanical speed (rpm), $\omega_n$ the pump nominal mechanical speed (rpm) as in the list above and F and G are interpolation functions.

To identify the pump flow rate, the functions "F" and "G" need to be inversed.

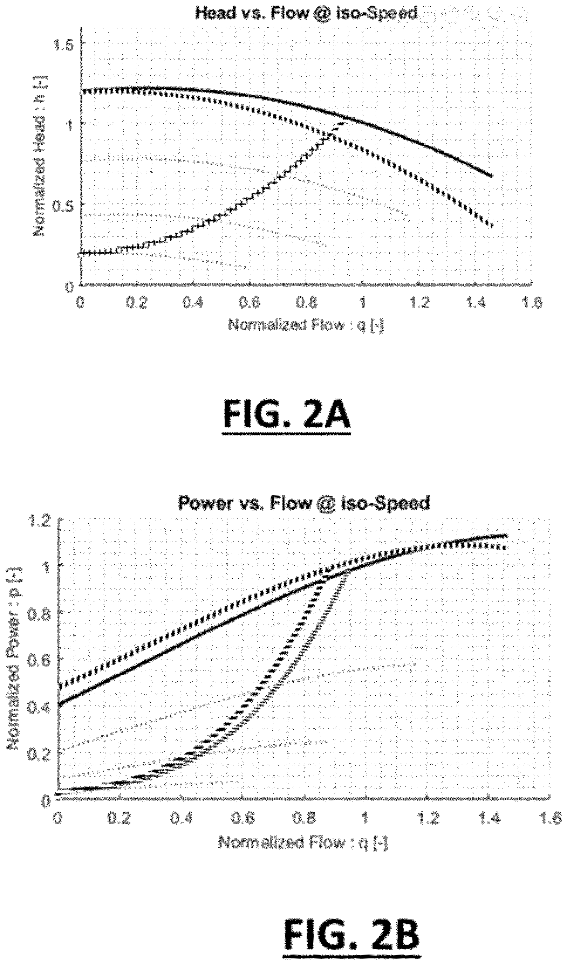

When using the pump characteristics "Head vs. Flow rate", as in figure 2A the equation is:

$$Q_{pump} = x \cdot F^{-1}(H_{pump}, x^2)$$

When using the pump characteristics "Power vs. Flow rate" as in figure 2B the equation is:

$$Q_{pump} = x \cdot G^{-1}(Pw_{pump}, x^2)$$

In practice, the pump flow rate inside the pump is higher than the system flow rate that would be measured outside the pump due to the internal recirculation inside the pump:

$$Q_{system} = Q_{pump} - \partial Q(\omega, Q_{pump})$$

Due to the pump ageing, the pump characteristics change, and do not provide a correct information of the flow rate downstream the pump.

The present disclosure proposes a solution to identify the flow rate outcoming from the pump which is different from the flow rate inside the pump due to internal recirculation. The invention consists of the identification of the pump outcoming flow rate without using a flow sensor but by using an additional pressure sensor information and known pipe characteristics.

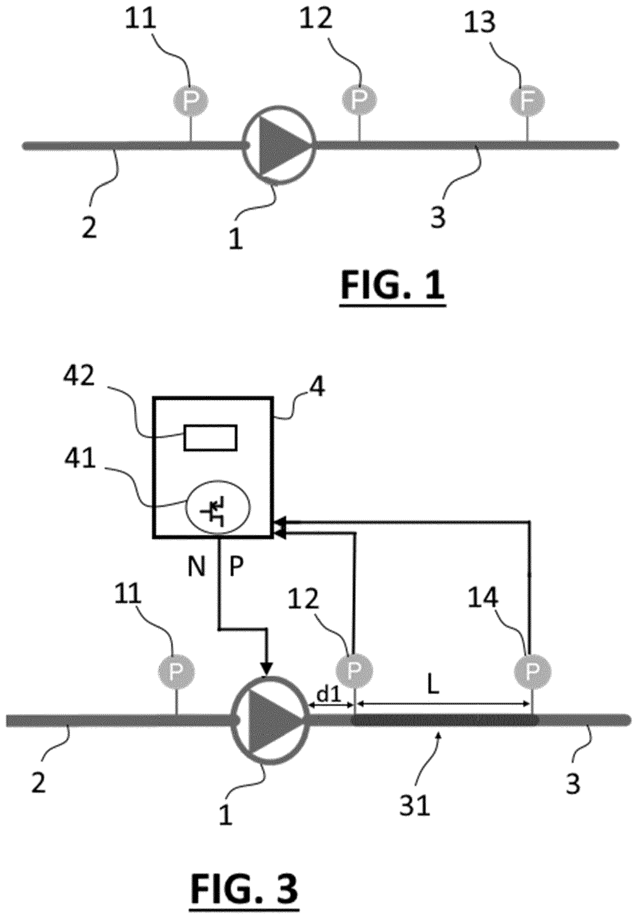

Figure 3 provides a schematic drawing of a present disclosure example using two pressure sensors 12, 14 placed at well-known distances d2 and d1+d2 on a downstream pipe and measuring a first pressure P1 at distance d2 from the pump and a second pressure P2 at distance d1+d2 from the pump to estimate the flow rate that pass through this pipe by estimating the pressure losses and comparing such to the measured differential pressure on this pipe.

The principle is to use an estimator of the flow rate passing through the section of the pipe between the two-pressure sensors using the following estimator model E1:

$$E1 : \begin{cases} \hat{Q} = K_p \cdot \left( \Delta P_{measured} - \widehat{\Delta P} \right) + \frac{d\hat{Q}}{dt} \ (1) \\ \frac{d\hat{Q}}{dt} = K_i \cdot \left( \Delta P_{measured} - \widehat{\Delta P} \right) \ (2) \\ \widehat{\Delta P} = \frac{\left( \hat{F} \cdot L \cdot v^2 \cdot \rho \right)}{2 \cdot D} \ (3) \end{cases}$$

$$K_i = \frac{K_p}{T_{iq}}$$

Where $K_p$ and  are configured depending on the identification of the characteristics of the system and where the estimator model E1 is programmed in a computerized system having a processor programmed to execute iterative calculations based on the estimator to determine the estimated flow rate $\hat{Q}$.

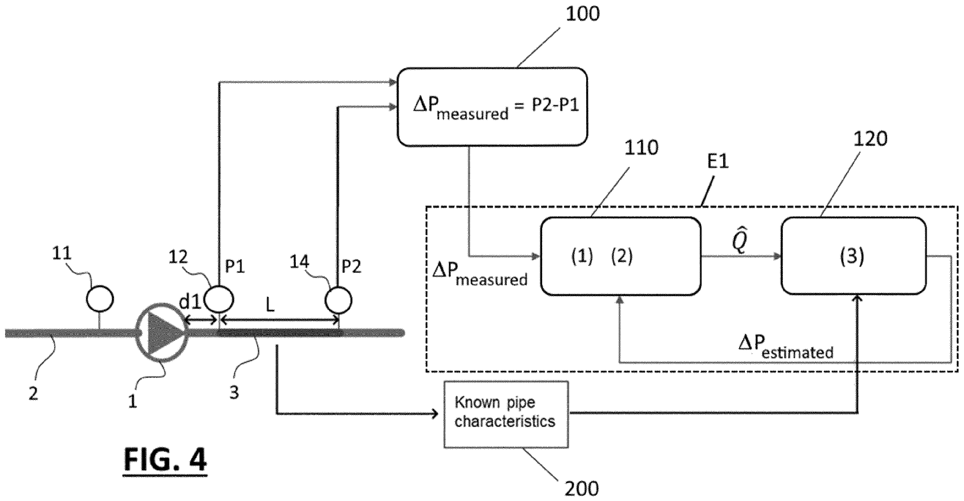

As shown in figure 4, to implement the estimator, a first step 100 comprises a calculation of $\Delta P_{measured}$ as P2-P1, calculation of equations (1), (2) with an initial $\Delta P_{estimated}$ value then calculation of equation (3) with known pipe characteristics 200 to obtain a new $\Delta P_{estimated}$, the calculations being reiterated to obtain convergence on an estimated flow rate $\hat{Q}$.

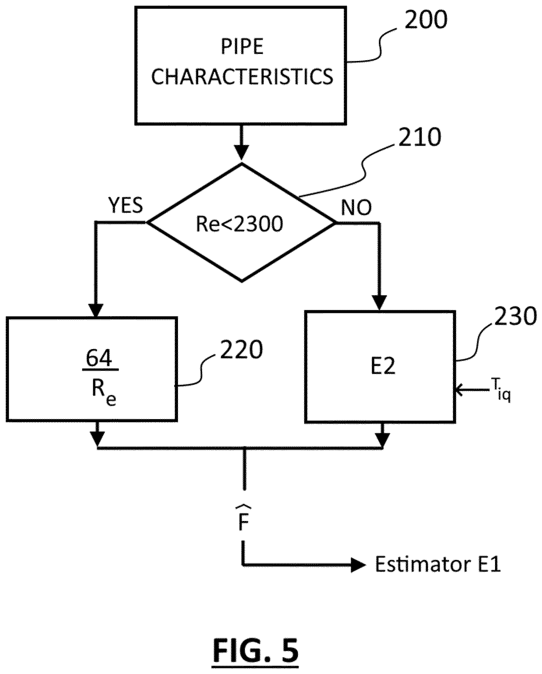

In this model $\hat{F}$ may be a fixed value but to provide a more accurate estimation, $\hat{F}$ is made dependent of the Reynolds coefficient $R_e$ of the flow in the downstream pipe and calculated in another algorithm as depicted in figure 5. In such case, after entry of the pipe characteristics 200 and a test 210 on the value of $R_e$ the calculation of $\hat{F}$ becomes:

If $R_e < 2300$ at step 220,

$$\hat{F} = \frac{64}{R_e} \ (4)$$

Else if $R_e \geq 2300$ at step 230 the calculation of $\hat{F}$ is done with a second estimator model E2 hereunder:

$$E2 : \begin{cases} \hat{F} = K_1 \cdot \left( 1 - \hat{X} \right) + \frac{d\hat{F}}{dt} \ (5) \\ \frac{d\hat{F}}{dt} = K_2 \cdot \left( 1 - \hat{X} \right) \ (6) \\ \hat{X} = -2 \times \sqrt{\hat{F}} \times \log \left( \frac{2.51}{R_e \times \sqrt{F}} + \frac{nu}{3.71 \times D} \right) \ (7) \end{cases}$$

$$K_1 = 1 ; K_2 = \frac{K_1}{T_i} = \frac{K_1}{T_{iq}/_2} \ (8)$$

In this second estimator, $T_{i_q}$ the integrator time constant is chosen to have a greater dynamic than the physical pump system time constant and Ti, the integral time constant of the second estimator, is chosen smaller than $T_{i_q}$, e.g. $T_{i_q}/2$.

The calculated estimated friction losses coefficient $\hat{F}$ is then entered in the first estimator E1.

Tiq integrator time constant (s) for the flow estimator, Kp proportional gain for the flow estimator and the needed pipe characteristics and fluid characteristics: L: Pipe length (m); D: Pipe diameter (m); v: Fluid flow velocity (m/s); $\rho$: Fluid density (kg/m3); $R_e$: Reynolds coefficient; $\mu$: Dynamic viscosity kg/(m.s); nu: Pipe rugosity (m) are stored in a memory of the computerized system.

The computerized system may be an electronic control unit with a microcontroller having analog to digital conversion means and receiving the pressures P1 and P2 as inputs and comprising a program provided with the estimators algorithms and data storage for the needed constants or may be part of a command unit 4 as shown in figure 3 such as a variable speed drive for the pump such command unit comprising the power control 41 for the pump motor and a processor system 42 to implement the drive command software and the above process software.

In this regard, the process may comprise obtaining the pump speed N and power P information coming from the variable speed drive of the pump to compare the estimated output flow rate and the flow rate calculated with the pump curves of the pump to detect wear of the pump.

The method is particularly suitable if the pump is a centrifugal pump.

## Industrial Applicability

The present disclosure avoids the use of a flow meter which is more expensive than a pressure sensor and more complicated to install on an existing station. The solution will provide the information of the flow given by the centrifugal pump in the system by using only the information of the two-pressure sensors installed on the upstream pipe and downstream pipes. the benefit of the solution is huge because it simplifies the installation and provide the information of flow by pump for different applications: control, protection, monitoring, pump wear monitoring and for predictive maintenance.

The invention is not limited to the description above and the invention object of the attached claims may be used in a remote survey system or a local fault detection program.

## Claims

1. - Method for estimating the output flow rate provided by a pump (1), in a system comprising said pump, an upstream pipe (2) and a downstream pipe (3), by using pressure information coming from a first downstream pressure sensor (12) placed on the downstream pipe (3) at a first distance (d1) from the pump (1) and a second downstream pressure sensor (14) placed on the downstream pipe (3) at a second distance (d1 + L) from the pump (1) such that a known distance $L$ separates said first and second pressure sensors (12, 14), said method comprising calculating said output flow rate using the downstream pipe characteristics, the distance between the first and the second sensors and an output flow rate estimator model E1 of the flow rate $\hat{Q}$ in the downstream pipe.

2. - Method according to claim 1 where the output flow rate estimator model E1 is defined by the equations:

$$\begin{cases} \hat{Q} = K_p \cdot \left(\Delta P_{measured} - \widehat{\Delta P}\right) + \dfrac{d\hat{Q}}{dt} \\[2ex] \dfrac{d\hat{Q}}{dt} = K_i \cdot \left(\Delta P_{measured} - \widehat{\Delta P}\right) \\[2ex] \widehat{\Delta P} = \dfrac{\left(\hat{F} \cdot L \cdot v^2 \cdot \rho\right)}{2 \cdot D} \end{cases}$$

Where $\hat{Q}$ is the Estimated flow rate (m3/h), $\widehat{\Delta P}$ is the Estimated differential pressure (bar), $\Delta P_{measured}$ is the Measured differential pressure (bar), $\hat{F}$ is the Estimated friction losses coefficient , $L$ is the Pipe length (m) between said first and second pressure sensors (12, 14), D is the Pipe diameter (m), $v$ is the Fluid flow velocity (m/s), $\rho$ is the Fluid density (kg/m3), $K_p$ is the Proportional gain of the flow estimator, $K_i = \dfrac{K_p}{T_{iq}}$ in which $T_{iq}$ is the Integrator time constant (s) in the flow estimator.

3. - Method according to claim 2 wherein the friction loss coefficient $\hat{F}$ is a fixed constant.

4. - Method according to claim 2 comprising a friction loss coefficient $\hat{F}$ calculation based on a friction loss coefficient estimator model E2 defined by the equations:

$$\begin{cases} \hat{F} = K_1 \cdot \left(1 - \hat{X}\right) + \frac{\widehat{dF}}{dt} \\ \frac{d\hat{F}}{dt} = K_2 \cdot \left(1 - \hat{X}\right) \\ \hat{X} = -2 \times \sqrt{\hat{F}} \times \log\left(\frac{2.51}{R_e \times \sqrt{F}} + \frac{nu}{3.71 \times D}\right) \end{cases}$$

when the Reynolds coefficient $R_e$ of the flow in the downstream pipe is greater or equal than 2300;

$$\hat{F} = \frac{64}{R_e}$$

or comprising a friction loss coefficient $\hat{F}$ calculation where     when the Reynolds coefficient $R_e$ of the flow in the downstream pipe is smaller than 2300.

5. - Method according to any one of the preceding claims comprising measuring a pump speed (N) and power information (P) coming from a command unit (4) of said pump to compare the estimated output flow rate and the flow rate calculated with the pump curves of the pump to detect wear of the pump.

6. - Method according to any one of the preceding claims wherein said pump is a centrifugal pump.

7. - Software comprising instructions to implement the method according to any one of the preceding claims when the software is executed by a processor.

8. - Computer-readable non-transient recording medium on which the software of claim 7 is registered to implement the method of any one of claims 1 to 6 when such software is executed by a processor.

**FIG. 1**

**FIG. 3**

## FIG. 2A

## FIG. 2B

FIG. 4

PIPE CHARACTERISTICS — 200

Re<2300 — 210

YES → $\dfrac{64}{R_e}$ — 220

NO → E2 — 230 ← $T_{iq}$

$\widehat{F}$

Estimator E1

**FIG. 5**

Europäisches
Patentamt

European
Patent Office

Office européen
des brevets

## EUROPEAN SEARCH REPORT

Application Number

EP 23 30 6305

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 726 827 B1 (UNIV OF CANTERBURY [NZ]) 11 December 2019 (2019-12-11) | 1-4,6-8 | INV.<br>F04D15/00<br>G01F1/34 |
| Y | * paragraph [0008] *<br>* paragraph [0031] *<br>* paragraph [0182] *<br>* paragraph [0185] *<br>* figures 1, 2 *<br>* claims 1, 9 * | 5 | |
| Y | US 2012/247200 A1 (AHONEN TERO [FI] ET AL) 4 October 2012 (2012-10-04)<br>* paragraph [0020] - paragraph [0021] *<br>* paragraph [0029] *<br>* figure 1 * | 5 | |

TECHNICAL FIELDS
SEARCHED        (IPC)

F04D
G01F

The present search report has been drawn up for all claims

| Place of search | Date of completion of the search | Examiner |
|---|---|---|
| The Hague | 29 May 2024 | Oliveira, Damien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 6305

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | | Publication date | Patent family member(s) | | Publication date |
|---|---|---|---|---|---|
| EP 2726827 | B1 | 11-12-2019 | CN | 103814277 A | 21-05-2014 |
| | | | EP | 2726827 A1 | 07-05-2014 |
| | | | NZ | 618705 A | 31-07-2015 |
| | | | US | 2014200836 A1 | 17-07-2014 |
| | | | US | 2018128660 A1 | 10-05-2018 |
| | | | WO | 2013002656 A1 | 03-01-2013 |
| US 2012247200 | A1 | 04-10-2012 | CN | 102734183 A | 17-10-2012 |
| | | | EP | 2505847 A1 | 03-10-2012 |
| | | | US | 2012247200 A1 | 04-10-2012 |

EPO FORM P0459

For more details about this annex : see Official Journal of the European Patent Office, No. 12/82